# EUROPEAN PATENT APPLICATION

(11) **EP 2 763 004 A1**
(43) Date of publication of application: **06.08.2014**
(21) Application number: 12835251.5
(22) Date of filing: 24.09.2012
(51) Int. Cl.: G06F 3/041

(54) **INTERACTION METHOD AND DEVICE IN TOUCH TERMINAL, AND INTERACTION METHOD, SERVER AND COMPUTER STORAGE MEDIUM IN NETWORK APPLICATION**

(30) Priority: 28.09.2011 CN 201110300054
(71) Applicant: Tencent Technology (Shenzhen) Company Limited, Shenzhen, Guangdong 518044 (CN)
(72) Inventor: LI, Lijuan, Shenzhen Guangdong 518044 (CN)
(74) Representative: Mattsson, Niklas
(86) International application number: PCT/CN2012/081862
(87) International publication number: WO 2013/044776

(57) **Abstract**

The invention relates to an interaction method and a device in a touch terminal, and an interaction method, a server and a computer storage medium in network application. The Interaction method in the touch terminal comprises steps of: acquiring touch event from a user; acquiring a slide track based on the continuous slide occurred by the touch event, and obtaining a selected interaction object based on the slide track; triggering the selected interaction object to response the touch event based on the slide track. By means of obtaining selected interaction object and slide track based on touch event inputted by user, and then realizing response of touch event by the slide track, the interaction method and the device in the touch terminal, and the interaction method, the server and the storage medium can achieve interaction operations without operations like click selection, twice confirmation, etc., the complexity of operation is reduced effectively and the convenience of operation is improved.

## Description

### FIELD OF THE INVENTION

The invention relates to a computer interaction technology, and in particular, to an interaction method and device in a touch terminal, and an interaction method, a server and a computer storage medium in a network application.

### BACKGROUND

As technology develops, more and more users will not depend on fixed computers to interact with each other, and an interaction via more flexible mobile device such as phone, tablet could also satisfy various requirements of the users. Touch terminal in the mobile device plays a more and more important role, wherein the touch terminal is a mobile device utilizing a touch screen as an interaction interface for interaction with user and acquiring operation instructions of the user via the touch screen.

However, in a situation in which a user implements interaction via a touch terminal, if it is necessary to perform a selection operation on an interaction interface in a touch screen, then after the user clicks a selected object, it is required to request the user to control a pointer to move to a confirmation dialog box fixedly set in the interaction interface, to determine whether the selected object is an interaction object desired to be selected by the selection operation of the user; and only when the user clicks on a certain button, such as a "confirm" button, it is possible to implement the interaction operation with the selected object in the interaction interface. This process is complex and inconvenient for the user.

User interaction via touch terminal is based on a conventional computer interaction mode, and a plurality of click operations are needed whether in selection of the interaction object or in other operations for triggering the interaction object. Even a network application running on the touch terminal will need a plurality of operations input by the user to trigger the interaction object to operate according to the input operations. However, these operations are too complicated for the network application on the touch terminal and will produce a large error rate.

### SUMMARY OF THE INVENTION

In view of this, it is necessary to provide an interaction method in a touch terminal capable of simplifying the operations and lowering the error rate.

In addition, it is also necessary to provide an interaction method in a network application capable of simplifying the operations and lowering the error rate.

In addition, it is also necessary to provide an interaction device in a touch terminal capable of simplifying the operations and lowering the error rate.

In addition, it is also necessary to provide an interaction server in a network application capable of simplifying the operations and lowering the error rate.

In addition, it is also necessary to provide a computer storage medium capable of improving convenience of the operations.

An interaction method in a touch terminal is provided, comprising the steps of:
acquiring a touch event of a user;
acquiring a slide track based on a continuous slide occurred by the touch event, and obtaining a selected interaction object according to the slide track; and
triggering the selected interaction object to respond to the touch event according to the slide track.

Preferably, the step of acquiring the slide track based on the continuous slide occurred by the touch event comprises:
detecting whether the touch event of the user is a sliding operation in a detection area according to the slide track; and
responding to the touch event if the result is "YES",
wherein the detection area corresponds to the selected interaction object.

Preferably, after the step of acquiring the slide track based on the continuous slide occurred by the touch event, the method further comprises the step of:
extracting a start position and an end position of the slide track at edges of the detection area.

Preferably, the step of detecting whether the touch event of the user is the sliding operation in the detection area according to the slide track comprises:
determining whether the start position is the same point in the detection area as the end position; and
if the result is "NO", advancing to the step of responding to the touch event.

Preferably, the step of detecting whether the touch event of the user is the sliding operation in the detection area according to the slide track comprises:
acquiring a connection line between the start position and the end position;
determining whether the connection line passes through the detection area; and
if the result is "YES", advancing to the step of responding to the touch event.

An interaction method in a network application is provided, comprising the steps of:
determining whether a network application client triggering interaction is a touch client;
if the result is "YES", acquiring a touch event uploaded by the network application client triggering interaction, acquiring a slide track based on a continuous slide occurred by the touch event, obtaining a selected interaction object in the network application client according to the slide track, and feeding back a response to the touch event to the network application client according to the slide track; and
if the result is "NO", acquiring a selected interaction object obtained by a selection operation in the network application client, acquiring a click operation triggered on the interaction object, and feeding back a response to the click operation to the interaction object according to the click operation.

Preferably, the step of feeding back the response to the touch event to the network application client according to the slide track comprises:
detecting whether the touch event of the user is a sliding operation in a detection area according to the slide track; and
if the result is "YES", then feeding back a response to the touch event to the network application client triggering interaction,
wherein the detection area corresponds to the selected interaction object.

Preferably, after the step of acquiring the slide track based on the continuous slide occurred by the touch event, the method further comprises the step of:
extracting a start position and an end position of the slide track at edges of the detection area.

Preferably, the step of detecting whether the touch event of the user is the sliding operation in the detection area according to the slide track comprises:
determining whether the start position is the same point in the detection area as the end position; and
if the result is "NO", advancing to the step of feeding back the response to the touch event to the network application client triggering interaction.

Preferably, the step of detecting whether the touch event of the user is the sliding operation in the detection area according to the slide track comprises:
acquiring a connection line between the start position and the end position;
determining whether the connection line passes through the detection area; and
if the result is "YES", advancing to the step of feeding back the response to the touch event to the network application client triggering interaction.

An interaction device in a touch terminal is provided, comprising:
an event acquiring module for acquiring a touch event of a user;
a processing module for acquiring a slide track based on a continuous slide occurred by the touch event and obtaining a selected interaction object according to the slide track; and
a trigger responding module for triggering the selected interaction object to respond to the touch event according to the slide track.

Preferably, the trigger responding module comprises:
a detecting unit for detecting whether the touch event of the user is a slide operation in a detection area according to the slide track and informing a responding unit if the result is "YES"; and
the responding unit for responding to the touch event,
wherein the detection area corresponds to the selected interaction object.

Preferably, the processing module further comprises:
an extracting unit for extracting a start position and an end position of the slide track at edges of the detection area.

Preferably, the detecting unit is further configured to determine whether the start position is the same point in the detection area as the end position, and to inform the responding unit if the result is "NO".

Preferably, the detecting unit is further configured to acquire a connection line between the start position and the end position, determine whether the connection line passes through the detection area, and to inform the responding unit if the result is "YES".

An interaction server in a network application is provided, comprising:
a client identifying module for determining whether a network application client triggering interaction is a touch client, informing an event acquiring module if the result is "YES", and informing an object selecting module if the result is "NO";
the event acquiring module for acquiring a touch event uploaded by the network application client triggering interaction;
a processing module for acquiring a slide track based on a continuous slide occurred by the touch event, and obtaining a selected interaction object in the network application client according to the slide track;
a trigger responding module for feeding back a response to the touch event to the network application client according to the slide track;
an object selecting module for acquiring a selected interaction object obtained by a selection operation in the network application client;
a click acquiring module for acquiring a click operation triggered on the interaction object; and
a click responding module for feeding back a response to the click operation to the interaction object according to the click operation.

Preferably, the trigger responding module comprises:
a detecting unit for detecting whether the touch event of the user is a sliding operation in a detection area according to the slide track, and informing a responding unit if the result is "YES"; and
the responding unit for feeding back a response to the touch event to the network application client triggering interaction,
wherein the detection area corresponds to the selected interaction object.

Preferably, the processing module further comprises:
an extracting unit for extracting a start position and an end position of the slide track at edges of the detection area.

Preferably, the detecting unit is further configured to determine whether the start position is the same point in the detection area as the end position, and to inform the responding unit if the result is "NO".

Preferably, the detection unit is further configured to acquire a connection line between the start position and the end position, to determine whether the connection line passes through the detection area, and to inform the responding unit if the result is "YES".

A computer storage medium storing computer executable instructions for controlling a computer to execute an interaction method in a touch terminal is provided, the method comprising the steps of:
acquiring a touch event of a user;
acquiring a slide track based on a continuous slide occurred by the touch event, and obtaining a selected interaction object according to the slide track; and
triggering the selected interaction object to respond to the touch event according to the slide track.

Preferably, the step of acquiring the slide track based on the continuous slide occurred by the touch event comprises:
detecting whether the touch event of the user is a sliding operation in a detection area according to the slide track; and
responding to the touch event if the result is "YES",
wherein the detection area corresponds to the selected interaction object.

Preferably, after the step of acquiring the slide track based on the continuous slide occurred by the touch event, the method further comprises the step of:
extracting a start position and an end position of the slide track at edges of the detection area.

Preferably, the step of detecting whether the touch event of the user is the sliding operation in the detection area according to the slide track comprises:
determining whether the start position is the same point in the detection area as the end position; and
if the result is "NO", advancing to the step of responding to the touch event.

Preferably, the step of detecting whether the touch event of the user is the sliding operation in the detection area according to the slide track comprises:
acquiring a connection line between the start position and the end position;
determining whether the connection line passes through the detection area; and
if the result is "YES", advancing to the step of responding to the touch event.

By means of obtaining a selected interaction object and a slide track by a user-input touch event and implementing a response to the touch event by the slide track, the interaction method and device in the touch terminal, and the interaction method, server and computer storage medium in the network application can achieve interaction operations by only one touch and sliding operation, without operations like click selection, twice confirmation, etc., and the complexity of operation is reduced effectively, which can simplify the operations, lower the error rate, and improve convenience of operations.

### DESCRIPTION OF THE DRAWINGS

Fig. 1 is a flow diagram showing an interaction method in a touch terminal of an embodiment of the invention;
Fig. 2 is a flow diagram showing a step of triggering a selected interaction object to respond to the touch event according to the slide track in Fig. 1;
Fig. 3 is a flow diagram showing a step of detecting whether the touch event of the user is a sliding operation in a detection area in Fig. 2;
Fig. 4 is a schematic diagram showing a slide detection area for a sliding gesture of the user in an embodiment;
Fig. 5 is a flow diagram showing an interaction method in a network application in an embodiment;
Fig. 6 is a structure schematic diagram of an interaction device in a touch terminal in an embodiment;
Fig. 7 is a structure schematic diagram of the trigger responding module in Fig. 6; and
Fig. 8 is a structure schematic diagram of an interaction server in a network application in an embodiment.

### DETAILED DESCRIPTION

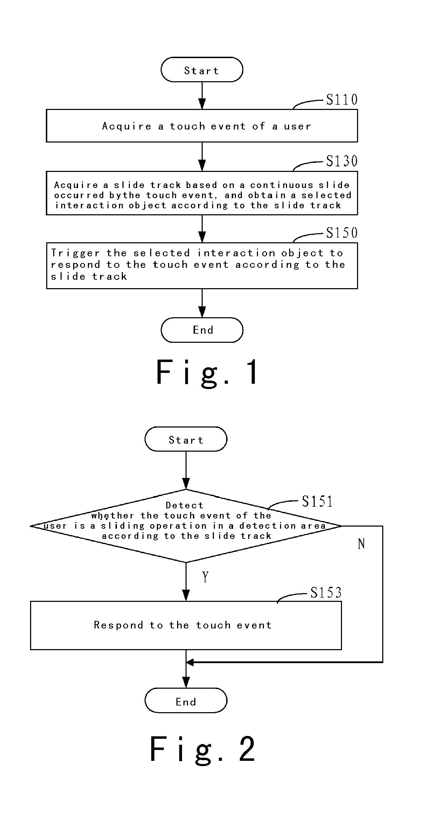

Fig. 1 shows an interaction method in a touch terminal of an embodiment of the invention, comprising the following steps.

In step S 110, a touch event of a user is acquired.

In the present embodiment, the user may input the touch event on the touch screen of the touch terminal, wherein the touch event comprises various gestures of the user on the touch screen, such as sliding gesture, etc. In particular, the touch terminal presents an interaction interface to the user, and the user applies a gesture, such as a sliding gesture on a certain interaction object in the interaction interface.

In step S130, a slide track is acquired based on a continuous slide occurred by the touch event, and a selected interaction object is obtained according to the slide track.

In the present embodiment, the touch event is a series of continuous gestures; and on the basis of the series of continuous gestures input by the user, it is possible to grasp the slide of the user-input touch event occurred in the interaction interface and to record the slide track produced in the interaction interface by the series of continuous gestures; then, it is possible to determine which element in the interaction interface is the interaction object desired by the user according to the slide track.

In step S150, the selected interaction object is triggered to respond to the touch event according to the slide track.

In the present embodiment, it is determined according to the slide track whether the user-input touch event is a trigger operation for triggering an interaction object or a misoperation of the user. For example, in a game, if the user wants to issue an attack action from a certain object in a game interface, he/she may apply a series of continuous gestures, such as a knock-on gesture, a sliding gesture, etc., on the object to select this object, in order to initiate the user interaction with the object; and he/she may confirm the selected object as the object issuing the attack action by sliding over the object, so as to trigger the response to the gesture applied by the user.

In one embodiment, as shown in Fig. 2, a particular process of the above step S150 is described as follows.

In step S151, it is detected whether the touch event of the user is a sliding operation in a detection area according to the slide track, and if the result is "YES", then the process advances to step S153, and if the result is "NO", the process ends.

In the present embodiment, the detection area is a certain area previously set in the interaction interface, and the detection area may be a certain area set on the interaction object icon corresponding to the selected interaction object. Each interaction object in the interaction interface has a corresponding detection area in a one-by-one correspondence, in order to detect whether the touch event on the interaction object input by the user is valid to avoid response to the user's misoperation.

After the interaction object is selected through the user's knock-on gesture, it is detected whether the slide track of the touch event produced in the interaction interface is located within the detection area corresponding to the selected interaction object. If the result is "YES", then it means that the user wants to respond to the touch event by using this selected interaction object as the trigger object, and if the result is "NO", then it means that the acquired input operation of the user is not a valid operation for triggering the interaction object, and no response to this touch event will be triggered.

In step S153, the touch event is responded to.

In another embodiment, after the above step S130, a step of extracting a start position and an end position of the slide track at edges of the detection area is further included.

In the present embodiment, in order to further improve accuracy of the detection in the detection area, when the sliding operation of the user's finger comes into contact with an edge of the detection area, this position is recorded as the start position, and the position when the sliding operation departs from the detection area is recorded as the end position.

Furthermore, it is possible to derive the start position and end position at edges of the detection area according to a sliding direction of the touch event and the overlapping points between the slide track and the edges of the detection area.

The above step S151 is specifically implemented by determining whether the start position is the same point in the detection area as the end position. If the result is "NO", the process advances to step S153; and if the result is "YES", the process ends.

In the present embodiment, generally, the sliding operation of the user's sliding gesture in the detection area will enter into the detection area at one point and leave out the detection area at another point. Therefore, it is possible to determine whether the start position and end position extracted at edges of the detection area are a same point. If the result is "NO", it means that an operation for triggering the selected interaction object is performed and a response to the operation is required, and if the result is "YES", it means that this sliding gesture in the detection area may be a misoperation of the user, and the interaction process ends.

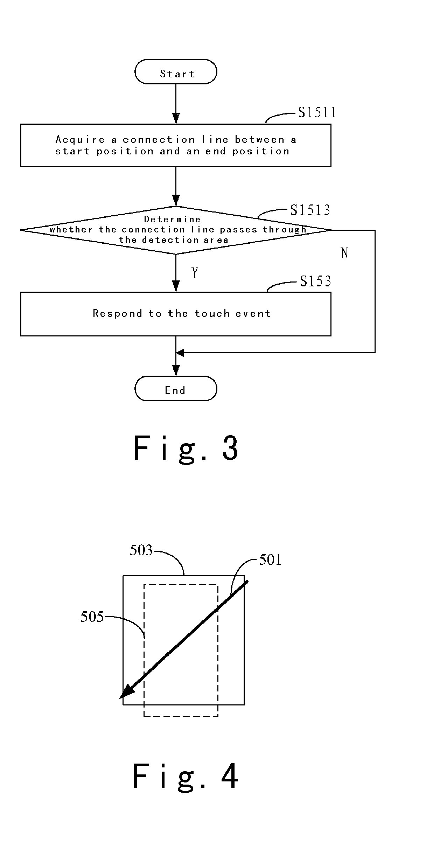

In another embodiment, as shown in Fig. 3, a particular process of the above step S151 is described as follows.

In step S1511, a connection line between the start position and the end position is acquired.

In step S 1513, it is determined whether the connection line passes through the detection area. If the result is "YES", the process advances to step S153, and if the result is "NO", the process ends.

In the present embodiment, as shown in Fig. 4, it is detected whether the user's sliding gesture continuously slides over the detection area by determining whether the connection line 501 between the start position and the end position passes through the detection area 505 of the interaction object 503. If the result is "YES", it is necessary to respond to the user's sliding gesture; and if the result is "NO", the process ends.

The interaction method based on the above touch terminal can be applied into various network applications. The present invention can provide a more simplified interaction method used in network application for network applications in the touch terminal, wherein the interaction method in the network application is the method for implementing interaction for the touch terminal when running the network application.

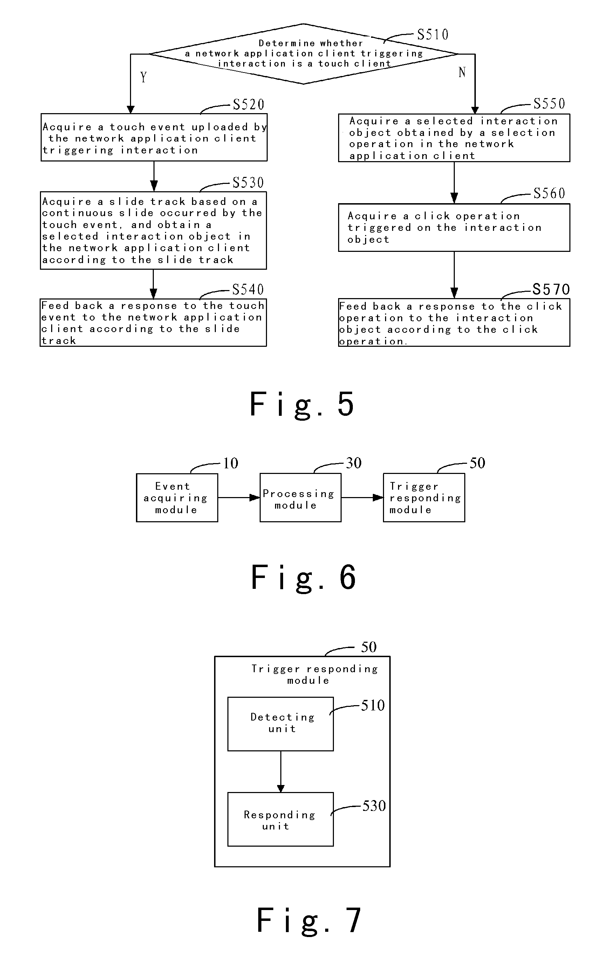

As shown in Fig. 5, in one embodiment, an interaction method in a network application comprises the following steps of:
step S510, determining whether a network application client triggering interaction is a touch client; and if the result is "YES", the process advances to step S520, and if the result is "NO", the process advances to step S550;
step S520, acquiring a touch event uploaded by the network application client triggering interaction;
step S530, acquiring a slide track based on a continuous slide occurred by the touch event, and obtaining a selected interaction object in the network application client according to the slide track;
step S540, feeding back a response to the touch event to the network application client according to the slide track;
step S550, acquiring a selected interaction object obtained by a selection operation in the network application client;
step S560, acquiring a click operation triggered on the interaction object; and
step S570, feeding back a response to the click operation to the interaction object according to the click operation.

In accordance with the above interaction method in the network application, when it is determined that the network application client triggering interaction is a touch terminal, the interaction method based on the above touch terminal is applied to implement interaction in the network application; and when it is determined that the network application client triggering interaction is not a touch client, the existing computer interaction method is applied to implement interaction in the network application.

In accordance with the above interaction method in the network application, the network application implemented in the touch terminal needs only one touch and slide operation to enable interaction; however, in the existing computer interaction method, at least two input operations are needed to enable interaction with the network application. Therefore, the network application interaction implemented in the touch terminal remarkably simplifies the operation.

In the above interaction method in the network application, the particular process of steps S510 to S540 is described above as set forth in the interaction method in the above touch terminal, and is omitted herein.

Fig. 6 shows an interaction device in a touch terminal of an embodiment of the invention, the interaction device comprising an event acquiring module 10, a processing module 30 and a trigger responding module 50.

The event acquiring module 10 is configured to acquire a touch event from a user.

In the present embodiment, the user inputs the touch event on a touch screen of the touch terminal, the touch event comprising various gestures of the user on the touch screen, such as a sliding gesture, etc. In particular, the touch terminal presents an interaction interface to the user, and the user applies the sliding gesture or the like to a certain interaction object in the interaction interface via the touch screen.

The processing module 30 is configured to acquire a slide track based on a continuous slide occurred by the touch event, and to obtain a selected interaction object according to the slide track.

In the present embodiment, the touch event is a series of continuous gestures; and on the basis of the series of continuous gestures input by the user, it is possible to grasp the slide of the user-input touch event occurred in the interaction interface and to record the slide track produced in the interaction interface by the series of continuous gestures; then, it is possible to determine which element in the interaction interface is the interaction object desired by the user according to the slide track.

The trigger responding module 50 is configured to trigger the selected interaction object to respond to the touch event according to the slide track.

In the present embodiment, the trigger responding module 50 is configured to determine according to the slide track whether the user-input touch event is a trigger operation for triggering an interaction object or a misoperation of the user. For example, in a game, if the user wants to issue an attack action from a certain object in a game interface, he/she may apply a series of continuous gestures, such as a knock-on gesture, a sliding gesture, etc., on the object to select this object, in order to initiate the user interaction with the object; and he/she may confirm the selected object as the object issuing the attack action by sliding over the object, so as to trigger the response to the gesture applied by the user.

In one embodiment, as shown in Fig. 7, the trigger responding module 50 comprises a detecting unit 510 and a responding unit 530.

The detecting unit 510 is configured to detect whether the touch event of the user is a sliding operation in a detection area according to the slide track, and if the result is "YES", then the responding unit 530 is informed, and if the result is "NO", the process ends.

In the present embodiment, the detection area is a certain area previously set in the interaction interface, and the detection area may be a certain area set on the interaction object icon corresponding to the selected interaction object. Each interaction object in the interaction interface has a corresponding detection area in a one-by-one correspondence, in order for the detecting unit 510 to detect whether the touch event on the interaction object input by the user is valid to avoid response to the user's misoperation.

After the interaction object is selected through the user's knock-on gesture, the detecting unit 510 will detect whether the slide track of the touch event produced in the interaction interface is located within the detection area corresponding to the selected interaction object. If the result is "YES", then it means that the user wants to respond to the touch event by using this selected interaction object as the trigger object, and if the result is "NO", then it means that the acquired input operation of the user is not a valid operation for triggering the interaction object, and no response to this touch event will be triggered.

The responding unit 530 is configured to respond to the touch event.

In another embodiment, the processing module 30 further comprises an extracting unit configured to extract a start position and an end position of the slide track at edges of the detection area.

In the present embodiment, in order to further improve accuracy of the detection in the detection area, the extracting unit records the position when the sliding operation of the user's finger comes into contact with an edge of the detection area as the start position, and records the position when the sliding operation departs from the detection area as the end position.

Furthermore, it is possible for the extracting unit to derive the start position and end position at edges of the detection area according to a sliding direction of the touch event and the overlapping points between the slide track and the edges of the detection area.

The detecting unit 510 is further configured to determine whether the start position is the same point in the detection area as the end position. If the result is "NO", the responding unit 530 is informed; and if the result is "YES", the process ends.

In the present embodiment, generally, the sliding operation of the user's sliding gesture in the detection area will enter into the detection area at one point and leave out the detection area at another point. Therefore, it is possible for the detecting unit 510 to determine whether the start position and end position extracted at edges of the detection area are a same point. If the result is "NO", it means that an operation for triggering the selected interaction object is performed and a response to the operation is required, and if the result is "YES", it means that this sliding gesture in the detection area may be a misoperation of the user, and the interaction process ends.

In another embodiment, the detecting unit 510 is further configured to acquire a connection line between the start position and the end position and to determine whether the connection line passes through the detection area. If the result is "YES", the responding unit 530 is informed.

In the present embodiment, the detecting unit 510 detects whether the user's sliding gesture continuously slides over the detection area by determining whether the connection line between the start position and the end position passes through the detection area. If the result is "YES", the responding unit 530 is informed to respond to the user's sliding gesture; and if the result is "NO", the process ends.

The interaction method based on the above touch terminal can be applied into various network applications. The present invention can provide a more simplified interaction server used in network application for network applications in the touch terminal, wherein the interaction server in the network application is the server for implementing interaction for the touch terminal when running the network application.

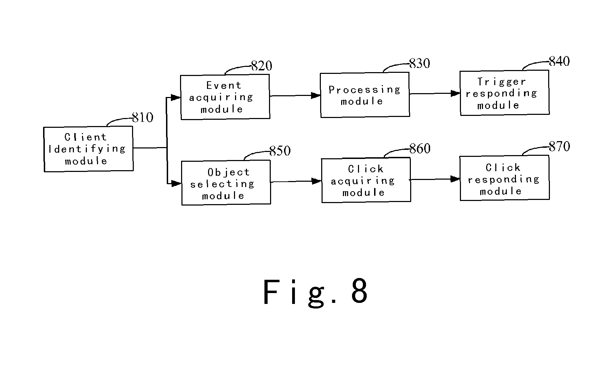

As shown in Fig. 8, in one embodiment, an interaction server in a network application comprises a client identifying module 810, an event acquiring module 820, a processing module 830, a trigger responding module 840, an object selecting module 850, a click acquiring module 860 and a click responding module 870.

The client identifying module 810 is configured to determine whether a network application client triggering interaction is a touch client; and if the result is "YES", the event acquiring module 820 is informed, and if the result is "NO", the click acquiring module 860 is informed.

The event acquiring module 820 is configured to acquire a touch event uploaded by the network application client triggering interaction.

The processing module 830 is configured to acquire a slide track based on a continuous slide occurred by the touch event, and to obtain a selected interaction object in the network application client according to the slide track.

The trigger responding module 840 is configured to feed back a response to the touch event to the network application client according to the slide track.

The object selecting module 850 is configured to acquire a selected interaction object obtained by a selection operation in the network application client.

The click acquiring module 860 is configured to acquire a click operation triggered on the interaction object.

The click responding module 870 is configured to feed back a response to the click operation to the interaction object according to the click operation.

In accordance with the interaction server in the network application, when it is determined that the network application client triggering interaction is a touch terminal, the interaction device based on the above touch terminal is applied to implement interaction with the network application.

In the above interaction server in the network application, the particular structure and function of the client identifying module 810, the event acquiring module 820, the processing module 830 and the trigger responding module 840 are described above as set forth in the interaction device in the above touch terminal, and are omitted herein.

By means of obtaining a selected interaction object and a slide track by a user-input touch event and implementing a response to the touch event by the slide track, the interaction method and device in the touch terminal, and the interaction method, server and computer storage medium in the network application can achieve interaction operations by only one touch and sliding operation, without operations like click selection, twice confirmation, etc., and the complexity of operation is reduced effectively, which can simplify the operations, lower the error rate, and improve the convenience of operations.

By means of detecting a detection area corresponding to a selected interaction object and determining whether to respond to a touch event, the interaction method and device in the touch terminal, and the interaction method, server and computer storage medium in the network application can lower a risk of misoperation.

The present invention also provides a computer storage medium storing computer executable instructions for controlling a computer to perform the interaction method in the above touch terminal. The particular steps of the interaction method in the touch terminal performed by the computer executable instructions in the computer storage medium are described as above, and are omitted herein.

The above embodiments only show several implementations of the present invention. The description herein is specific and detailed, and cannot be interpreted as limitation to the protection scope of the present invention. It should be noted that anyone skilled in the art can make equivalent embodiments with equivalent variations by making some alternations or modifications using the technical contents disclosed above, without departing from the scope of the present invention. The protection scope of the present invention should be defined only by the appended claims.

## Claims

1. An interaction method in a touch terminal, comprising the steps of:
acquiring a touch event of a user;
acquiring a slide track based on a continuous slide occurred by the touch event, and obtaining a selected interaction object according to the slide track; and
triggering the selected interaction object to respond to the touch event according to the slide track.

2. The interaction method in the touch terminal according to claim 1, **characterized in that** the step of triggering the selected interaction object to respond to the touch event according to the slide track comprises:
detecting whether the touch event of the user is a sliding operation in a detection area according to the slide track; and
responding to the touch event if the result is "YES",
wherein the detection area corresponds to the selected interaction object.

3. The interaction method in the touch terminal according to claim 2, **characterized in that** after the step of acquiring the slide track based on the continuous slide occurred by the touch event, the method further comprises the step of:
extracting a start position and an end position of the slide track at edges of the detection area.

4. The interaction method in the touch terminal according to claim 3, **characterized in that** the step of detecting whether the touch event of the user is the sliding operation in the detection area according to the slide track comprises:
determining whether the start position is the same point in the detection area as the end position; and
if the result is "NO", advancing to the step of responding to the touch event.

5. The interaction method in the touch terminal according to claim 3, **characterized in that** the step of detecting whether the touch event of the user is the sliding operation in the detection area according to the slide track comprises:
acquiring a connection line between the start position and the end position;
determining whether the connection line passes through the detection area; and
if the result is "YES", advancing to the step of responding to the touch event.

6. An interaction method in a network application, comprising the steps of:
determining whether a network application client triggering interaction is a touch client;
if the result is "YES", acquiring a touch event uploaded by the network application client triggering interaction, acquiring a slide track based on a continuous slide occurred by the touch event, obtaining a selected interaction object in the network application client according to the slide track, and feeding back a response to the touch event to the network application client according to the slide track; and
if the result is "NO", acquiring a selected interaction object obtained by a selection operation in the network application client, acquiring a click operation triggered on the interaction object, and feeding back a response to the click operation to the interaction object according to the click operation.

7. The interaction method in the network application according to claim 6, **characterized in that** the step of feeding back the response to the touch event to the network application client according to the slide track comprises:
detecting whether the touch event of the user is a sliding operation in a detection area according to the slide track; and
if the result is "YES", then feeding back a response to the touch event to the network application client triggering interaction,
wherein the detection area corresponds to the selected interaction object.

8. The interaction method in the network application according to claim 7, **characterized in that** after the step of acquiring the slide track based on the continuous slide occurred by the touch event, the method further comprises the step of:
extracting a start position and an end position of the slide track at edges of the detection area.

9. The interaction method in the network application according to claim 8, **characterized in that** the step of detecting whether the touch event of the user is the sliding operation in the detection area according to the slide track comprises:
determining whether the start position is the same point in the detection area as the end position; and
if the result is "NO", advancing to the step of feeding back the response to the touch event to the network application client triggering interaction.

10. The interaction method in the network application according to claim 8, **characterized in that** the step of detecting whether the touch event of the user is the sliding operation in the detection area according to the slide track comprises:
acquiring a connection line between the start position and the end position;
determining whether the connection line passes through the detection area; and
if the result is "YES", advancing to the step of feeding back the response to the touch event to the network application client triggering interaction.

11. An interaction device in a touch terminal, **characterized in that** the interaction device comprises:
an event acquiring module for acquiring a touch event of a user;
a processing module for acquiring a slide track based on a continuous slide occurred by the touch event and obtaining a selected interaction object according to the slide track; and
a trigger responding module for triggering the selected interaction object to respond to the touch event according to the slide track.

12. The interaction device in the touch terminal according to claim 11, **characterized in that** the trigger responding module comprises:
a detecting unit for detecting whether the touch event of the user is a slide operation in a detection area according to the slide track and informing a responding unit if the result is "YES"; and
the responding unit for responding to the touch event,
wherein the detection area corresponds to the selected interaction object.

13. The interaction device in the touch terminal according to claim 12, **characterized in that** the processing module further comprises:
an extracting unit for extracting a start position and an end position of the slide track at edges of the detection area.

14. The interaction device in the touch terminal according to claim 13, **characterized in that** the detecting unit is further configured to determine whether the start position is the same point in the detection area as the end position, and to inform the responding unit if the result is "NO".

15. The interaction device in the touch terminal according to claim 13, **characterized in that** the detecting unit is further configured to acquire a connection line between the start position and the end position, determine whether the connection line passes through the detection area, and to inform the responding unit if the result is "YES".

16. An interaction server in a network application, **characterized in that** the interaction server comprises:
a client identifying module for determining whether a network application client triggering interaction is a touch client, informing an event acquiring module if the result is "YES", and informing an object selecting module if the result is "NO";
the event acquiring module for acquiring a touch event uploaded by the network application client triggering interaction;
a processing module for acquiring a slide track based on a continuous slide occurred by the touch event, and obtaining a selected interaction object in the network application client according to the slide track;
a trigger responding module for feeding back a response to the touch event to the network application client according to the slide track;
an object selecting module for acquiring a selected interaction object obtained by a selection operation in the network application client;
a click acquiring module for acquiring a click operation triggered on the interaction object; and
a click responding module for feeding back a response to the click operation to the interaction object according to the click operation.

17. The interaction server in the network application according to claim 16, **characterized in that** the trigger responding module comprises:
a detecting unit for detecting whether the touch event of the user is a sliding operation in a detection area according to the slide track, and informing a responding unit if the result is "YES"; and
the responding unit for feeding back a response to the touch event to the network application client triggering interaction,
wherein the detection area corresponds to the selected interaction object.

18. The interaction server in the network application according to claim 17, **characterized in that** the processing module further comprises:
an extracting unit for extracting a start position and an end position of the slide track at edges of the detection area.

19. The interaction server in the network application according to claim 18, **characterized in that**
the detecting unit is further configured to determine whether the start position is the same point in the detection area as the end position, and to inform the responding unit if the result is "NO".

20. The interaction server in the network application according to claim 18, **characterized in that**
the detection unit is further configured to acquire a connection line between the start position and the end position, to determine whether the connection line passes through the detection area, and to inform the responding unit if the result is "YES".

21. A computer storage medium storing computer executable instructions for controlling a computer to execute an interaction method in a touch terminal, **characterized in that** the method comprises the steps of:
acquiring a touch event of a user;
acquiring a slide track based on a continuous slide occurred by the touch event, and obtaining a selected interaction object according to the slide track; and
triggering the selected interaction object to respond to the touch event according to the slide track.

22. The computer storage medium according to claim 21, **characterized in that** the step of triggering the selected interaction object to respond to the touch event according to the slide track comprises:
detecting whether the touch event of the user is a sliding operation in a detection area according to the slide track; and
responding to the touch event if the result is "YES",
wherein the detection area corresponds to the selected interaction object.

23. The computer storage medium according to claim 22, **characterized in that** after the step of acquiring the slide track based on the continuous slide occurred by the touch event, the method further comprises the step of:
extracting a start position and an end position of the slide track at edges of the detection area.

24. The computer storage medium according to claim 23, **characterized in that** the step of detecting whether the touch event of the user is the sliding operation in the detection area according to the slide track comprises:
determining whether the start position is the same point in the detection area as the end position; and
if the result is "NO", advancing to the step of responding to the touch event.

25. The computer storage medium according to claim 23, **characterized in that** the step of detecting whether the touch event of the user is the sliding operation in the detection area according to the slide track comprises:
acquiring a connection line between the start position and the end position;
determining whether the connection line passes through the detection area; and
if the result is "YES", advancing to the step of responding to the touch event.
